# EUROPEAN PATENT SPECIFICATION

(11) **EP 1 262 046 B1**
(45) Date of publication and mention of the grant of the patent: **09.11.2005**
(21) Application number: 01909731.0
(22) Date of filing: 09.02.2001
(51) Int. Cl.: H04L 12/56, H04Q 7/24

(54) **INTERWORKING IN A COMMUNICATION SYSTEM**
ZUSAMMENWIRKUNG IN EINEM KOMMUNIKATIONSSYSTEM
INTERFONCTIONNEMENT DANS UN SYSTEME DE COMMUNICATION

(30) Priority: 06.03.2000 GB 0005363
(43) Date of publication of application: 04.12.2002
(60) Divisional application: 05076867.0
(73) Proprietor: Nokia Corporation, 02150 Espoo (FI)
(72) Inventor: GREIS, Marc, Irving,Texas 75063 (US)
(74) Representative: Ruuskanen, Juha-Pekka
(86) International application number: PCT/EP2001/001452
(87) International publication number: WO 2001/067687

(56) References cited:
- EP-A- 0 982 899
- WO-A-99/33301
- US-A- 5 570 084
- TERZIS A, KRAWCZYK J, WROCLAWSKI J, ZHANG L: "RSVP Operation Over Ip Tunnels" RFC 2746 (REQUEST FOR COMMENT), [Online] 1 January 2000 (2000-01-01), pages 1-22, XP002139061 Internet Engineering Task Force (IETF) Retrieved from the Internet: <URL:http://sunsite.hr/cgi-bin/rfc/rfc2746 .txt> [retrieved on 2000-05-29]
- BRADEN R, ZHANG L, BERSON S, HERZOG, S, JAMIN S: "Resource Reservation Protocol" RFC 2205 (REQUEST FOR COMMENT), [Online] 1 September 1997 (1997-09-01), pages 60-62, XP002139062 Internet Engineering Task Force) Retrieved from the Internet: <URL:http://sunsite.hr/cgi-bin/rfc/rfc2205 .txt> [retrieved on 2000-05-29]

## Description

### Field of the Invention

The present invention relates to interworking between different functions of a telecommunications system.

### Background of the Invention

Telecommunications networks typically operate in accordance with a given standard or specification which sets out what the various elements of the network are permitted to do and how that should be achieved. For example, the standard or specification may define whether the user, or more precisely, user equipment or terminal is provided with circuit switched or packet switched service. The standard or specification may also define the communication protocols and/or parameters which shall be used for the connection. In other words, the standards and/or specifications define the "rules" on which the communication within a communication system can be based on. Examples of the different standards and/or specifications include, without limiting to these, specifications such as GSM (Global System for Mobile communications) or various GSM based systems (such as GPRS: General Packet Radio Service), AMPS (American Mobile Phone System), DAMPS (Digital AMPS), WCDMA (Wideband Code Division Multiple Access) or TD/CDMA in UMTS (Time Division / Code Division Multiple Access in Universal Mobile Telecommunications System), IMT 2000 and so on.

In a cellular communication system a base station serves mobile stations or similar terminal apparatus (mobile station MS in the GSM, User Equipment UE in the UMTS) via a wireless interface. Each of the cells of the cellular system can be served by an appropriate transceiver apparatus. For example, in the WCDMA radio access network the cell is served by Node B, which is connected to and controlled by an element called as a radio network controller (RNC) node. In the GSM radio network the cell is served by a base station (BTS), which is connected to and controlled by a base station controller (BSC) node. The BSC/RNC element may be connected to and controlled by a mobile switching center (MSC) or similar facility. The BSC/RNC may also be connected to and controlled by a serving GPRS support node (SGSN). The MSCs of a network are typically interconnected and there may be one or more Gateway MSC (GMSC) for connecting the cellular network to other telecommunication networks. The SGSN may be connected to a Gateway GPRS support node (GGSN) for connecting the mobile network to the Internet and other packet switched networks.

Thus, although the mobile station may be in communication via only one controller and/or gateway node at the time, it may also communicate via several different nodes. The nodes the mobile station is connected with may also be configured and operated based on different standards and/or specifications. The differences in the standards and/or specifications may cause difficulties with respect to the interworking of the various elements of the different network systems. The following will describe an example of the possible incompability problem in the context of Quality of Service (QoS) signaling between the different elements and protocols of a communication system comprising one or more packet switched UMTS/GRPS networks.

The General Packet Radio Service GPRS relates to the transfer of data to and from mobile stations. Typically, the GPRS standard is provided in conjunction with the Global System for Mobile communications GSM standard. The GSM standard is a circuit switched service and is originally designed for speech services. There are elements of the GSM standard and the GPRS standard which are in common. The GPRS networks are described in more detail e.g. in 3GPP Technical Specification 3G TS 23.060 version 3.2.0, "General Packet Radio Service (GPRS); Service description; Stage 2", January 2000. This document is incorporated herein by reference. An adaptation of the GPRS standard is also being proposed for use with the third generation standard UMTS, which typically uses code division multiple access. The packet data part of the UMTS is contained in the above referenced 23.060 specification, i.e. 23.060 applies for packet switched data both for the UMTS and the GPRS.

To negotiate an end-to-end QoS between terminals in UMTS/GRPS networks and terminals in other data networks such as the IP (Internet Protocol) or X.25 based networks, a conventional fixed IP network, or another UMTS/GRPS network, a protocol such as Resource Reservation Protocol RSVP may be used. An example of the use of RSVP in an IP network is provided by the RFC 2746, by A. Tergis et al, in which IPV4 packets are sent in IPV6 tunnels.

However, the inventor has found that in the current interworking between the RSVP QoS signaling and the UMTS/GPRS QoS mechanisms (i.e. so called PDPcontext activation) the RSVP messages do not carry enough QoS information to determine the full set of UMTS/GPRS QoS parameters from these messages. More particularly, the RSVP PATH message carries QoS information in a "SENDER_TSPEC" object. The "SENDER_TSPEC" object contains only the following QoS parameters: 'Token Bucket Rate', 'Token Bucket Size', 'Peak Data Rate', 'Minimum Policed Unit', 'Maximum Packet Size'. Said UMTS/GPRS QoS and the parameters thereof are defined e.g. in 3GPP Technical Specification 3G TS 23.107 version 3.1.0, "QoS Concept and Architecture", October 1999. A more detailed description of the RSVP PATH message can be found e.g. from document by Braden, R., et al, "Resource ReSerVation Protocol (RSVP) -Version 1 Functional Specification", IETF RFC 2205, September 1997. The "SENDER_TSPEC" object is defined e.g. by Wroclawski, J. in document "The Use of RSVP with IETF Integrated Services", IETF RFC 2210, September 1997. These three documents are incorporated herein by reference.

It is not possible for a network element within a UMTS network to determine essential UMTS QoS parameters like 'Traffic Class' and 'Transfer Delay' alone from the QoS parameters contained in this SENDER_TSPEC object.

The RSVP RESV message may carry an additional "RSPEC" (within a "FLOWSPEC" object) containing a rate and a slack term, which may be used to derive the 'Transfer Delay' parameter. However, the mapping may be problematic since the RSPEC (like all other RSVP QoS parameters) is meant to be used for end-to-end QoS while the UMTS Transfer Delay parameter only defines the delay within the UMTS network. In addition, the RSPEC applies to queuing delay, while in the UMTS/GPRS QoS specifies transfer delay.

The UMTS QoS parameters and the RSVP QoS parameters as contained in a FLOWSPEC object and a possible mapping between these parameters are shown in Table 1. This table shows the UMTS specific QoS parameters which can not be derived from the RSVP QoS parameters.

**Table 1:**

| UMTS and RSVP QoS Parameters | |
|---|---|
| **UMTS Attributes** | **RSVP Parameters** |
| Traffic Class | Service Class? |
| Maximum Bitrate | Peak Data Rate |
| Guaranteed Bitrate | Token Bucket Rate |
| Maximum SDU Size | Maximum Packet Size |
| Delivery Order | - |
| SDU Format Information | - |
| SDU Error Ratio | - |
| Residual Bit Error Ratio | - |
| Delivery of Erroneous SDUs | - |
| Transfer Delay | - |
| Traffic Handling Priority | - |
| Allocation/Retention Priority | - |
| - | Token Bucket Size |
| - | Rspec (Rate/Slack Term) |
| - | Minimum Policed Unit |

It also has to be noted that there are only three RSVP/IntServ service classes (Best Effort, Controlled Load, Guaranteed Service), but four UMTS service classes (Conversational, Streaming, Interactive, Background) which complicates further the mapping between these two parameters.

### Summary of the Invention

It is an aim of the embodiments of the present invention to address one or several of the above problems.

According to one aspect of the present invention, there is provided a method in a communication system including a first subsystem and a second subsystem, the method comprising: generating a control message that can be interpreted by at least one element of the first subsystem and at least one element of the second subsystem; adding to the control message an object containing control information that is transparent for the elements of the second subsystem; transmitting the control message via the first and second subsystems; and controlling the operation of at least one of the elements of the first subsystem based on the control information contained in the object.

The first subsystem may comprise a packet switched network providing wireless services for the users thereof. The second subsystem may also comprises a data network that is based on a packet switched communication protocol that is different from the communication protocol used by the first subsystem. The message may be transmitted further to a third subsystem comprising at least one element capable of interpreting the information carried by the object. The third subsystem may be based on substantially similar operational principles than the first subsystem.

The communication system may comprise at least a first terminal and a second terminal, the first terminal belonging to the first subsystem, and wherein a connection between the two terminals is negotiated based on a quality of service mechanism for packet data. The control message may comprise a resource reservation protocol message. The object may contain at least one quality of service parameter that is required by the first subsystem for connection set-up purposes.

According to another aspect of the present invention there is provided a communication system comprising: a first subsystem comprising a first plurality of elements for transmitting messages; a second subsystem comprising a second plurality of elements for transmitting messages; a controller for generating a control message that can be interpreted by at least one element of the first subsystem and at least one element of the second subsystem; and a controller for adding to the control message an object containing control information that is transparent for the elements of the second subsystem, wherein the arrangement is such that operation of at least one of the elements of the first subsystem is controlled based on the control information contained in the object while the elements of the second subsystem are not affected by the control information contained in the object.

According to another aspect of the present invention there is provided a user equipment for a system providing wireless packet switched communication between a first and second packet switched networks, the user equipment comprising: a controller for generating a control message to be signaled from the first network to the second network, the control message being readable by elements of a first predefined group of elements of the first and second networks; and a controller for adding to the control message an object containing control information, said message being readable only by elements of a second predefined group of elements of the first and second networks.

According to another aspect of the present invention there is provided a control message in a communication system that provides wireless packet data communication between first and second networks, the control message comprising: a portion that can be interpreted by elements of a first predefined group of elements of the first and second networks; and an object containing control information, said object being readable only by elements of a second predefined group of elements of the first and second networks.

The embodiments of the invention may improve interworking between the various functions, such as protocols and mechanisms. For example, interworking of the Resource Reservation Protocol RSVP and packet data QoS mechanisms of a packet switched service such as the Universal Mobile Telecommunication System UMTS or the General Packet Radio Service GPRS may be improved. In a more specific embodiment, the interworking between two UMTS/GPRS networks may be improved since it provides a possibility for an end-to-end signalling between UMTS networks based on RSVP messages.

### Brief Description of Drawings

For better understanding of the present invention, reference will now be made by way of example to the accompanying drawings in which:
Figure 1 shows a communication system where the embodiments of the present invention may be used; and

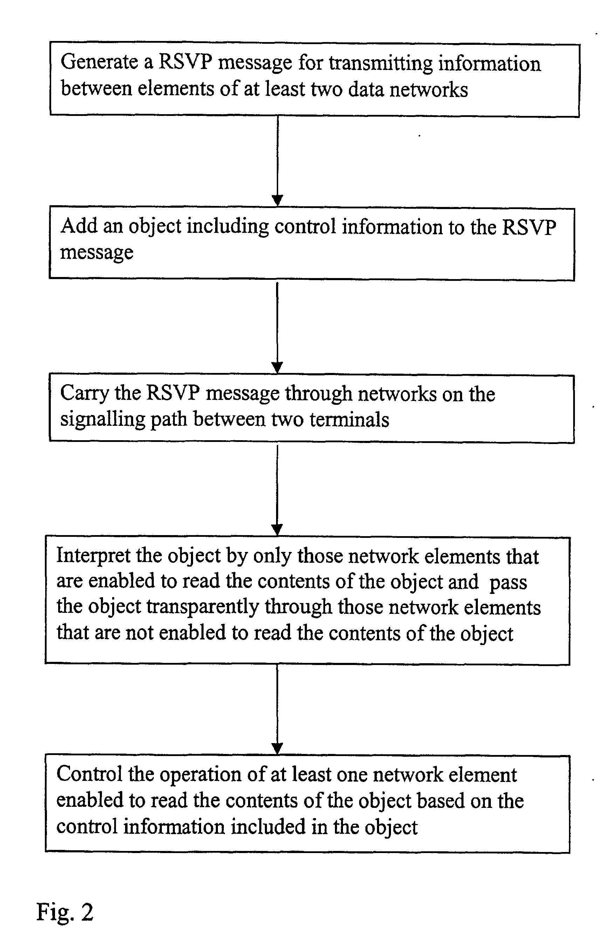

Figure 2 is a flowchart illustrating the operation of one embodiment of the present invention.

### Description of Preferred Embodiments of the Invention

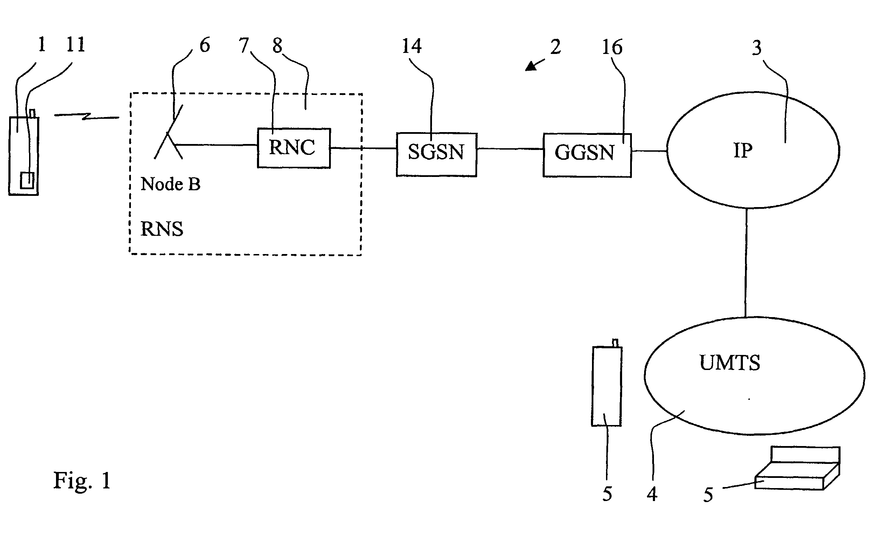

Reference is made to Figure 1 which shows a communication system in which the embodiments of the present invention may be employed. The area covered by the communication system is divided into a plurality of cells (not shown). Each cell has associated therewith a base station 6. Depending on the standard being used by the network, the base station is sometimes referred to as node B, for example in the third generation standards. The term base station will be used in this document to encompass all elements which transmit to mobile stations 1 or the like via the air interface. The mobile stations 1 or other user equipment is arranged to communicate with the respective base station. The mobile station 1 may be associated with terminal equipment 11, as will be explained later.

The embodiment of the invention is described in the context of a UMTS (Universal Mobile Telecommunications System) and a GPRS (General Packet radio Service) and communications involving packet data. However, it should be appreciated that embodiments of the present invention are applicable to any other communication system which deals with packet data, non-packet data or even voice communication or the like, such as the IMT 2000, wireless LAN or different access networks.

The elements of a UMTS network system 2 will now be discussed in more detail. The mobile station or user equipment 1 is arranged to communicate via the air interface with a respective base station 6. The base station is controlled by a radio network controller RNC 7. The radio network controller RNC and the base station may sometimes be referred to as the radio network subsystem RNS 8 or radio access network RAN. It should be appreciated that a UMTS network is typically provided with more than one RNC, and that each radio network controller is arranged generally to control more than one base station 6 although only one base station is shown in Figure 1. The elements of the RNS can be included in either or both of the RNC and the base station. This is an implementation issue.

The radio network subsystem 8 may be connected to a SGSN (serving GPRS support node) 14. The SGSN 14 keeps track of the mobile station's location and performs security functions and access control. The functions of the SGSN are defined e.g. in the 3GPP specification 33.060. The SGSN 14 is connected to a GGSN (gateway GPRS support node) 16. The GGSN 16 provides interworking with external packet switched networks, i.e. the GGSN acts as a gateway between the UMTS data network 2 and an external network 3, such as an IP based data network. The functions of a typical GGSN are also defined in the 3GPP specification.

Figure 1 shows further a second UMTS network 4. The second UMTS network may be of a substantially similar design than the first UMTS network 2.

Although not shown, the network system 2 may also be connected to conventional telecommunication networks, such as to a GSM based cellular public land mobile network (PLMN) or to a public switched telephone network (PSTN). The various networks may be interconnected to each other via appropriate interfaces and/or gateways.

The following describes an embodiment for improving interworking between the Resource Reservation Protocol RSVP and packet data QoS mechanisms of the Universal Mobile Telecommunication System UMTS and/or the General Packet Radio Service GPRS. The application of RSVP for carrying UMTS QoS parameters by defining a new RSVP object which can be interpreted by UMTS network elements while the object is carried transparently through other networks or links between two UMTS networks such that the element of the other networks or links are not aware of this additional object of the RSVP message. The described embodiments may be applied for UMTS networks as well as GPRS networks and any hybrids thereof.

A feature of the RSVP protocol is that it is modular. A RSVP message consists of a pre-defined set of objects, where the object type is indicated by the Class-Num octet in the header of each object. If an RSVP process in a network element encounters an unknown object while it processes an RSVP message, there are alternative possibilities for how to process this object and the whole message, based on the two high-order bits in the object's Class-Num octet. For example, if:
- Class-Num = 0bbbbbbb
   => the entire message containing this object is rejected and an error message is generated;
- Class-Num = 10bbbbbb
   => the network element ignores the object and does not forward it and no error message is generated;
- Class-Num = 11bbbbbb
   => the network element ignores the object but forwards the object in all messages resulting from the processed message.

The last mentioned alternative may thus be used for the extension of the RSVP protocol with network-specific objects. In principle, it is possible to add any desired information into these objects. It is thus possible to have objects that only apply for e.g. for the GGSN of a network, and/or objects which only apply e.g. for the mobile station MS. The added objects may be carried transparently through other networks and/or elements that are based on different standards, specifications or settings. That is, the forwarding of the RSVP messages is not affected in any way by such an added object in networks which are not able to interpret it. All those network elements or nodes that are not able to interpret the object will still be able to interpret the rest of the RSVP message.

In accordance with an embodiment of the present invention, a previously undefined RSVP object (referred to in the following as "UMTS QoS Object") with a Class-Num octet which matches the mask "11bbbbbb" is adapted to carry UMTS QoS (Quality of Service) information. The RSVP object may carry all UMTS QoS parameters which are defined e.g. in the above referred 3GPP Technical specification "QoS Concept and Architecture". The RSVP object may also carry only a subset of these parameters. The RSVP object may also carry QoS information which is currently not contained in the RSVP QoS parameters and which can be used to determine all the UMTS QoS parameters or a subset of these parameters.

The UMTS QoS information can be used by the network elements within the UMTS network 2 (the elements include the mobile station 1 as well as attached terminal equipment) to extend the information contained especially in the PATH messages. The UMTS QoS information can also be used in other RSVP messages to provide the UMTS network 2 with additional QoS information. The additional information is not included in conventional RSVP messages. The network elements can be adapted to use the information contained in the UMTS QoS object to avoid mapping inconsistencies between the RSVP QoS parameters and the UMTS QoS parameters. The UMTS QoS information can also be used to enable the transfer of UMTS QoS information between two remote end points or two UMTS networks within RSVP messages.

The use of UMTS QoS information requires that there are network elements within the UMTS network 2 which are able to generate this information and that there are elements within the UMTS network 2, the receiving UMTS network or other data network which are able to process and use this information as described above.

According to an alternative embodiment, a Class-Num octet may be used which matches the above described second possible mask "10bbbbbb" to avoid possible interference with proprietary solutions in other access networks. That is, the object is not forwarded from the particular element interpreting the message and the object and thus the object cannot cause interference. However, the interference problem can also be avoided by standardizing the Class-Num for the UMTS QoS Object within the appropriate instances.

The additional object within the RSVP message may be interpreted internally within one UMTS network but not in end-to-end QoS negotiation (e.g. it could be stripped from outgoing RSVP messages by the GGSN 16 or any other appropriate element). The object can also be used in the end-to-end QoS negotiation between two UMTS networks so that a terminal in a UMTS network can be informed about the exact UMTS QoS requirements of a terminal in another UMTS network.

The first network element (including the terminal equipment 11 and/or the mobile station 1) in the UMTS network 2 which processes an RSVP message and which is able to perform a mapping between RSVP and UMTS QoS parameters is preferably used for the mapping and adding a UMTS QoS object to the forwarded RSVP message containing the resulting parameters. This object may also be added by the application that requests for the QoS. A possibility is to add the object by drivers or utilities within the terminal equipment 11. The user may control the terminal equipment 11, e.g. by means of the user interface (typically keypad) of the mobile station 1.

The UMTS QoS Object could be added to a RSVP message in an application running in the terminal equipment 11 which is integrated or attached to the mobile station 1. The application is both RSVP-aware and aware of the UMTS access network 8. In other words, the application is able to signal a RSVP message, is aware of the fact that the UE is attached to a UMTS network and knows the UMTS QoS (i.e. is enabled to add the UMTS QoS object to the RSVP message). The adding of the object may also occur in drivers or other utility applications running in the terminal equipment. A mobile station which is RSVP-aware may also be used. When the object is added at the user equipment or any other unit that is controllable by the user, the user is facilitated with a direct control over the UMTS QoS parameters transmitted to the network. This may be an advantage, since the user typically has the best or first hand knowledge of the type of the traffic that is to be transmitted (e.g. video data or speech data).

The UMTS QoS parameters may also be determined in a mapping procedure from the RSVP QoS parameters by a network element of the UMTS network 2. The network element may not be under the user's direct control. For example, a UMTS QoS Object may also be added to a RSVP message by the GGSN 16 upon receipt of an RSVP message. This allows for the signaling of UMTS QoS requirements to remote endpoints. It also allows signaling by a separate network element within the UMTS network which is responsible for QoS negotiation (e.g. bandwidth broker, etc.).

It should be appreciated that the UMTS QoS Object could be added to RSVP messages in several other locations as well and that the above examples do not exclude these.

The terminal equipment may be an external device such as a laptop computer which is attached to the mobile station 1.

The UMTS QoS object may be interpreted in several elements of the communication system depending the application. It should be appreciated that the following list of the possible network elements is not indented to be complete.

The interpretation may be accomplished in an RSVP aware mobile station 5 which receives an RSVP message from attached terminal equipment to trigger a PDP context activation procedure with the QoS parameters contained in the RSVP message. The interpretation may also be accomplished in an RSVP aware mobile station 5 which receives an RSVP message from a remote terminal which is implemented either in a UMTS-network or which is capable of adding a UMTS QoS Object to RSVP messages to trigger a PDP context activation procedure with the QoS parameters contained in the RSVP message.

A possible node for interpretation is a GGSN node which receives incoming or outgoing RSVP messages and which may have to trigger PDP context activation procedures based on these messages, perform admission control or map RSVP QoS parameters to UMTS QoS parameters.

In the embodiments the RSVP or any similar protocol providing a possibility to add one or more objects therein may be employed for carrying UMTS QoS parameters or one or more other parameters required by the network by defining a new object into the message. The added object can be interpreted by the elements of the particular network the one or more parameters are indented for while the object can be carried transparently through networks which do not base the operation thereof on the one or more parameters. The object may be added to the message such that the other networks may not even become aware of this additional part of the message. The addition of a UMTS QoS Object to RSVP messages allows applications, drivers or user-controlled utility applications which are aware of both RSVP and UMTS QoS to take full control of the UMTS QoS instead of leaving the mapping between RSVP QoS parameters and UMTS QoS parameters to other network elements.

The QoS requirements signaled by the RSVP messages can be split up in QoS requirements for the access network (contained in the UMTS QoS Object) and end-to-end QoS requirements (contained in the SENDER_TSPEC and FLOWSPEC objects).

RSVP messages containing the UMTS QoS Object can be transferred transparently through one or more external data networks, such as TCP/IP Internet and/or X.25 networks, no matter if these networks are aware of the RSVP modification or not. RSVP messages containing the UMTS QoS Object will neither be discarded nor cause error messages in network nodes which are not able to interpret this object. This allows for the signaling of QoS requirements between terminals in two UMTS networks.

The added object can be implemented as an optional feature. If a communication application is not able to create this object, it may be created e.g. by an RSVP-aware MT or by the GGSN. This allows for high flexibility (e.g. the operator may want to configure network elements to ignore or override the object) and even for proprietary implementations without causing any interworking problems with "traditional" RSVP.

According to a further embodiment the RSVP message is used for signaling the quality of service QoS communication between two data networks providing wireless services for the users thereof. The required QoS information is transmitted in the object, and no other QoS signaling is required.

It should be appreciated that whilst embodiments of the present invention have been described in relation to UMTS and GPRS networks and RSVP messages, embodiments of the present invention are applicable to any other suitable type of networks and protocols.

In an embodiment the communication between two data networks is not transmitted via a third network that is located between said two networks, but the subsystem between the two networks comprises an appropriate link or gateway. This type of embodiment is provided, for example, when the IP network 3 of Figure 1 is replaced by an appropriate link between the UMTS networks 2 and 4. An arrangement where the elements of the link between the two data networks may not be enabled to interpret the message is also possible. Correspondingly, the arrangement may be such that elements of a network between the two data networks may not be provided with means for interpreting any part of the message. According to a further embodiment the elements of a data network are divided in at least two subgroups such that the first group may interpret an object that is transparent for the second subgroup.

The data is described as being in packet form. In alternative embodiments of the invention the data may be sent in any suitable format.

It is also noted herein that while the above describes exemplifying embodiments of the invention, there are several variations and modifications which may be made to the disclosed solution without departing from the scope of the present invention as defined in the appended claims.

## Claims

1. A method in a communication system including a first subsystem and a second subsystem, the method comprising:
generating a control message that can be interpreted by at least one element of the first subsystem and at least one element of the second subsystem;
adding to the control message an object containing control information that is transparent for the elements of the second subsystem;
transmitting the control message via the first and second subsystems;
controlling the operation of at least one of the elements of the first subsystem based on the control information contained in the object, wherein the second subsystem comprises a data network that is based on a packet switched communication protocol that is different from the communication protocol used by the first subsystem.

2. A method as claimed in claim 1, wherein the first subsystem comprises a packet switched network providing wireless services for the users thereof.

3. A method as claimed in claim 1 or 2, wherein the first subsystem is based on a universal mobile telephone system and/or a general packet radio services.

4. A method as claimed in any preceding claim, wherein the second subsystem is an internet protocol based data network.

5. A method as claimed in any preceding claim, wherein the message is transmitted further to a third subsystem comprising at least one element capable of interpreting the information carried by the object.

6. A method as claimed in claim 5, wherein the third subsystem is based on substantially similar operational principles than the first subsystem.

7. A method as claimed in claim 5, wherein the object is interpreted in an element of the third subsystem

8. A method as claimed in any of the preceding claims, wherein the communication system comprises at least a first terminal and a second terminal, the first terminal belonging to the first subsystem, and wherein a connection between the two terminals is negotiated based on a quality of service mechanism for packet data.

9. A method as claimed in claim 8, wherein the second terminal belongs to a third subsystem.

10. A method as claimed in any preceding claim, wherein the control message comprises a resource reservation protocol message.

11. A method as claimed in any preceding claim, wherein the object contains at least one quality of service parameter that is required by the first subsystem for connection set-up purposes.

12. A method as claimed in claim 11, wherein the object carries all parameters required for the connection set-up.

13. A method as claimed in claim 11, wherein the object carries a subset of parameters required for the connection set-up.

14. A method as claimed in any of claims 1 to 10, wherein quality of service information is determined based on information carried by the object.

15. A method as claimed in any preceding claim, wherein additional quality of service information is determined based on the information carried by the object, and the additional information is used for avoiding inconsistencies between the quality of services parameters of different communication networks.

16. A method as claimed in any preceding claim, wherein the networks elements of the second subsystem ignore the object and forward the object in all messages that result from processing of the control message.

17. A method as claimed in any preceding claim, wherein the object includes at least one bit instructing the element processing the control message whether the object should be ignored or not by the element.

18. A method as claimed in claim 17, wherein a high order bit is included in the class-number octet of the object.

19. A method as claimed in any preceding claim, wherein a network element reads the information content of the object and removes the object from the message before forwarding the message.

20. A method as claimed in any preceding claim, wherein a network element in the communication path generates the objects and adds the object in the control message.

21. A method as claimed in claim 20, wherein the element comprises a mobile station.

22. A method as claimed in claim 20, wherein the element comprises an element of a radio access network of the first subsystem.

23. A method as claimed in claim 20, wherein the element comprises a gateway node between two different networks.

24. A method as claimed in any of claims 20 to 23, wherein the user of the network element is enabled to control the use of the objects.

25. A method as claimed in any preceding claim, wherein the object is interpreted in a terminal that terminates the connection.

26. A method as claimed in any preceding claim, wherein the object is interpreted in a gateway node between different networks.

27. A communication system comprising:
a first subsystem comprising a first plurality of elements for transmitting messages;
a second subsystem comprising a second plurality of elements for transmitting messages;
a controller for generating a control message that can be interpreted by at least one element of the first subsystem and at least one element of the second subsystem; and
a controller for adding to the control message an object containing control information that is transparent for the elements of the second subsystem, wherein the arrangement is such that operation of at least one of the elements of the first subsystem is controlled based on the control information contained in the object while the elements of the second subsystem are not affected by the control information contained in the object, wherein the second subsystem comprises a data network that is based on a packet switched communication protocol that is different from the communication protocol used by the first subsystem.

28. A communication system as claimed in claim 27, wherein the first subsystem comprises a packet switched network providing wireless services for the users thereof.

29. A communication system as claimed in claim 27 or 28, wherein the first subsystem is based on universal mobile telephone system specifications and/or a general packet radio service specifications.

30. A communication system as claimed in any of claims 27 to 29, wherein the second subsystem is a data network that is based on the Internet protocol.

31. A communication system as claimed in any of claims 27 to 30, wherein the first subsystem comprises a first network and a second network, the message being transmitted from the first network to the second network via the second subsystem.

32. A communication system as claimed in claim 31, wherein the first and second networks are based on similar operational principles.

33. A communication system as claimed in any of claims 27 to 32, wherein the communication system comprises at least a first terminal and a second terminal, the first terminal belonging to the first subsystem, and wherein a connection between the two terminals is adapted to be negotiated based on a quality of service mechanism for packet data.

34. A communication system as claimed in any of the claims 27 to 33, wherein the control message comprises a resource reservation protocol message.

35. A communication system as claimed in any of claims 27 to 34, wherein the object contains at least one quality of service parameter that is required by the first subsystem for connection set-up purposes.

36. A communication system as claimed in any of claims 27 to 35, wherein quality of service information is determined based on information carried by the object.

37. A communication system as claimed in any of claims 27 to 36, wherein the networks elements of the second subsystem are adapted to ignore the object and forward the object in all messages that result from processing of the control message.

38. A communication system as claimed in any of claims 27 to 37, wherein the network element in the communication path that generates the objects and adds the object in the control message is one of the following: a mobile station; an element of a radio access network of the first subsystem; a gateway node between two different networks.

39. A communication system as claimed in any of claims 27 to 38, wherein the object is interpreted by one of the following: a terminal that terminates the connection; an element of the third subsystem; a gateway node between different networks.

40. A communication system as claimed in claim 31, wherein the second subsystem comprises a link between the first and the second networks.

41. A user equipment for a system providing wireless packet switched communication between a first and second packet switched networks, the user equipment comprising:
a controller for generating a control message to be signaled from the first network to the second network, the control message being readable by elements of a first predefined group of elements of the first and second networks; and
a controller for adding to the control message an object containing control information, said message being readable only by elements of a second predefined group of elements of the first and second networks, wherein the first network is based on a packet switched communication protocol which is different from the communication protocol used by the second network.

42. A user equipment as claimed in claim 41, wherein the message comprises a resource reservation protocol message and the object contains quality of service information.

43. A control message for a communication system, said communication system providing wireless packet data communication between first and second networks, the control message comprising:
a portion for being interpreted by elements of a first predefined group of elements of the first and second networks; and
an object containing control information, said object being readable only by elements of a second predefined group of elements of the first and second networks, wherein the first network is based on a packet switched communication protocol which is different from the communication protocol used by the second network.

44. A control message as claimed in claim 43, wherein the message comprises a resource reservation protocol message and the object contains quality of service information.

## Patentansprüche

1. Verfahren in einem Kommunikationssystem, welches ein erstes Untersystem und ein zweites Untersystem enthält, wobei das Verfahren aufweist
Generieren einer Steuerungsnachricht, welche von zumindest einem Element des ersten Untersystems und zumindest einem Element des zweiten Untersystems interpretiert werden kann;
Hinzufügen eines für die Elemente des zweiten Untersystems transparente Steuerungsinformationen enthaltenden Objektes zu der Steuerungsnachricht;
Übertragen der Steuerungsnachricht über das erste und zweite Untersystem;
Steuern der Operation zumindest eines der Elemente des ersten Untersystems basierend auf der in dem Objekt enthaltenen Steuerungsinformation, wobei das zweite Untersystem ein Datennetz aufweist, welches auf einem Paketvermittlungskommunikationsprotokoll basiert, welches sich von dem im ersten Untersystem verwendeten Kommunikationsprotokoll unterscheidet.

2. Verfahren nach Anspruch 1, wobei das erste Untersystem ein dessen Nutzem drahtlose Dienste bereitstellendes Paketvermittlungsnetz aufweist.

3. Verfahren nach Anspruch 1 oder 2, wobei das erste Untersystem auf einem universellen Mobiltelefonsystem und/oder auf allgemeinen Paketfunkdiensten basiert.

4. Verfahren nach einem der vorangehenden Ansprüche, wobei das zweite Untersystem ein auf dem Internetprotokoll basierendes Datennetz ist.

5. Verfahren nach einem der vorangehenden Ansprüche, wobei die Nachricht weiter an ein drittes Untersystem übertragen wird, welches zumindest ein Element aufweist, das die von dem Objekt geführte Information interpretieren kann.

6. Verfahren nach Anspruch 5, wobei das dritte Untersystem auf zu dem ersten Untersystem im Wesentlichen ähnlichen operationalen Grundsätzen basiert.

7. Verfahren nach Anspruch 5, wobei das Objekt in einem Element des dritten Untersystems interpretiert wird.

8. Verfahren nach einem der vorangehenden Ansprüche, wobei das Kommunikationssystem zumindest ein erstes Endgerät und ein zweites Endgerät aufweist, wobei das erste Endgerät dem ersten Untersystem angehört und wobei eine Verbindung zwischen den beiden Endgeräten basierend auf einem Dienstqualitätsmechanismus für Paketdaten verhandelt wird.

9. Verfahren nach Anspruch 8, wobei das zweite Endgerät einem dritten Untersystem angehört.

10. Verfahren nach einem der vorangehenden Ansprüche, wobei die Steuerungsnachricht eine Ressourcenreservierungsprotokollnachricht aufweist.

11. Verfahren nach einem der vorangehenden Ansprüche, wobei das Objekt zumindest einen von dem ersten Untersystem zu Verbindungsaufbauzwecken benötigten Dienstqualitätsparameter enthält.

12. Verfahren nach Anspruch 11, wobei das Objekt alle für den Verbindungsaufbau benötigten Parameter führt.

13. Verfahren nach Anspruch 11, wobei das Objekt eine Untergruppe der für den Verbindungsaufbau benötigten Parameter führt.

14. Verfahren nach einem der Ansprüche 1 bis 10, wobei Dienstqualitätsinformation basierend auf von dem Objekt übertragener Information bestimmt wird.

15. Verfahren nach einem der vorangehenden Ansprüche, wobei zusätzliche Dienstqualitätsinformation basierend auf von dem Objekt übertragener Information bestimmt wird und die zusätzliche Information zum Vermeiden von Inkonsistenzen zwischen den Dienstqualitätsparametern verschiedener Kommunikationsnetze verwendet wird.

16. Verfahren nach einem der vorangehenden Ansprüche, wobei die Netzelemente des zweiten Untersystems das Objekt ignorieren und das Objekt in allen aus Verarbeitung der Steuerungsnachricht resultierenden Nachrichten weiterleiten.

17. Verfahren nach einem der vorangehenden Ansprüche, wobei das Objekt zumindest ein Bit enthält, welches das die Steuerungsnachricht verarbeitende Element anweist, ob das Objekt von dem Element ignoriert werden sollte oder nicht.

18. Verfahren nach Anspruch 17, wobei ein Bit mit hoher Wertigkeit im Klassenzahloktett des Objektes enthalten ist.

19. Verfahren nach einem der vorangehenden Ansprüche, wobei ein Netzelement den Informationsinhalt des Objektes liest und das Objekt vor dem Weiterleiten der Nachricht aus der Nachricht entfernt.

20. Verfahren nach einem der vorangehenden Ansprüche, wobei ein Netzelement auf dem Kommunikationspfad die Objekte generiert und das Objekt der Steuerungsnachricht hinzufügt.

21. Verfahren nach Anspruch 20, wobei das Element eine Mobilstation aufweist.

22. Verfahren nach Anspruch 20, wobei das Element ein Element eines Funkzugriffsnetzes des ersten Untersystems aufweist.

23. Verfahren nach Anspruch 20, wobei das Element einen Gatewayknoten zwischen zwei verschiedenen Netzen aufweist.

24. Verfahren nach einem der Ansprüche 20 bis 23, wobei es dem Nutzer des Netzelementes möglich ist, die Verwendung der Objekte zu kontrollieren.

25. Verfahren nach einem der vorangehenden Ansprüche, wobei das Objekt in einem die Verbindung abschließenden Endgerät interpretiert wird.

26. Verfahren nach einem der vorangehenden Ansprüche, wobei das Objekt in einem Gatewayknoten zwischen verschiedenen Netzen interpretiert wird.

27. Kommunikationssystem mit:
einem ersten Untersystem mit einer ersten Vielzahl von Elementen zur Übertragung von Nachrichten;
einem zweiten Untersystem mit einer zweiten Vielzahl von Elementen zur Übertragung von Nachrichten;
einer Steuereinrichtung zum Generieren einer Steuerungsnachricht, welche von zumindest einem Element des ersten Untersystems und zumindest einem Element des zweiten Untersystems interpretiert werden kann; und
einer Steuereinrichtung zum Hinzufügen eines Objektes zu der Steuerungsnachricht, welches für die Elemente des zweiten Untersystems transparente Steuerungsinformation enthält, wobei die Anordnung so ist, dass eine Operation zumindest eines der Elemente des ersten Untersystems basierend auf die in dem Objekt enthaltene Steuerungsinformation gesteuert wird, während die Elemente des zweiten Untersystems nicht durch die in dem Objekt enthaltene Steuerungsinformation beeinflusst werden, wobei das zweite Untersystem ein Datennetz aufweist, welches auf einem sich von dem im ersten Untersystem verwendeten Kommunikationsprotokoll unterscheidenden Paketvermittlungskommunikationsprotokoll basiert.

28. Kommunikationssystem nach Anspruch 27, wobei das erste Untersystem ein dessen Nutzem drahtlose Dienste bereitstellendes Paketvermittlungsnetz aufweist.

29. Kommunikationssystem nach Anspruch 27 oder 28, wobei das erste Untersystem auf Universalmobiltelefonsystemspezifikationen und/oder allgemeinen Paketfunkdienstspezifikationen basiert.

30. Kommunikationssystem nach einem der Ansprüche 27 bis 29, wobei das zweite Untersystem ein auf dem Internetprotokoll basierendes Datennetz ist

31. Kommunikationssystem nach einem der Ansprüche 27 bis 30, wobei das erste Untersystem ein erstes Netz und ein zweites Netz aufweist, wobei die Nachricht von dem ersten Netz an das zweite Netz über das zweite Untersystem übertragen wird.

32. Kommunikationssystem nach Anspruch 31, wobei das erste und das zweite Netz auf ähnlichen operationalen Grundsätzen basieren.

33. Kommunikationssystem nach einem der Ansprüche 27 bis 32, wobei das Kommunikationssystem zumindest ein erstes Endgerät und ein zweites Endgerät aufweist, wobei das erste Endgerät dem ersten Untersystem angehört und wobei eine Verbindung zwischen den beiden Endgeräten basierend auf einem Dienstqualitätsmechanismus für Paketdaten verhandelt wird.

34. Kommunikationssystem nach einem der Ansprüche 27 bis 33, wobei die Steuerungsnachricht eine Ressourcenreservierungsprotokollnachricht aufweist.

35. Kommunikationssystem nach einem der Ansprüche 27 bis 34, wobei das Objekt zumindest einen von dem ersten Untersystem zu Verbindungsaufbauzwecken benötigten Dienstqualitätsparameter enthält

36. Kommunikationssystem nach einem der Ansprüche 27 bis 35, wobei Dienstqualitätsinformation basierend auf von dem Objekt mitgeführter Information bestimmt wird.

37. Kommunikationssystem nach einem der Ansprüche 27 bis 36, wobei die Netzelemente des zweiten Untersystems angepasst sind, das Objekt zu ignorieren, und das Objekt in allen aus Verarbeitung der Steuerungsnachricht resultierenden Nachrichten weiterleiten.

38. Kommunikationssystem nach einem der Ansprüche 27 bis 37, wobei das Netzelement auf dem Kommunikationspfad, welches die Objekte generiert und der Steuerungsnachricht das Objekt hinzufügt, eines von folgenden ist eine Mobilstation; ein Element eines Funkzugriffsnetzes des ersten Untersystems; ein Gatewayknoten zwischen zwei verschiedenen Netzen.

39. Kommunikationssystem nach einem der Ansprüche 27 bis 38, wobei das Objekt von einem der Folgenden interpretiert wird: einem die Verbindung abschließenden Endgerät; einem Gatewayknoten zwischen verschiedenen Netzen.

40. Kommunikationssystem nach Anspruch 31, wobei das zweite Untersystem eine Verbindung zwischen dem ersten und dem zweiten Netz aufweist.

41. Nutzerausstattung für ein System, welches eine drahtlose Paketvermittlungskommunikation zwischen einem ersten und einem zweiten Paketvermittlungsnetz bereitstellt, wobei die Nutzerausstattung aufweist:
eine Steuerung zum Generieren einer von dem ersten Netz an das zweite Netz zu signalisierenden Steuerungsnachricht, wobei die Steuerungsnachricht von Elementen einer ersten vordefinierten Gruppe von Elementen des ersten und des zweiten Netzes lesbar ist, und
eine Steuerung zum Hinzufügen eines Steuerinformation enthaltenden Objektes zu der Steuerungsnachricht, wobei die Nachricht nur für Elemente einer zweiten vordefinierten Gruppe von Elementen des ersten und des zweiten Netzes lesbar ist, wobei das erste Netz auf einem Paketvermittlungskommunikationsprotokoll basiert, welches sich von dem in dem zweiten Netz verwendeten Kommunikationsprotokoll unterscheidet.

42. Nutzerausstattung nach Anspruch 41, wobei die Nachricht eine Ressourcenreservierungsprotokollnachricht aufweist und das Objekt eine Dienstqualitätsinformation enthält.

43. Steuerungsnachricht für ein Kommunikationssystem, wobei das Kommunikationssystem drahtlose Paketdatenkommunikation zwischen einem ersten und einem zweiten Netz bereitstellt, wobei die Steuerungsnachricht aufweist
einen von Elementen einer ersten vordefinierten Gruppe von Elementen des ersten und des zweiten Netzes zu interpretierenden Anteil; und
ein Steuerungsinformationen enthaltendes Objekt, wobei das Objekt nur von Elementen einer zweiten vordefinierten Gruppe von Elementen des ersten und des zweiten Netzes lesbar ist, wobei das erste Netz auf einem Paketvermittlungskommunikationsprotokoll basiert, welches sich von dem von dem zweiten Netz verwendeten Kommunikationsprotokoll unterscheidet.

44. Steuerungsnachricht nach Anspruch 43, wobei die Nachricht eine Ressourcenreservierungsprotokollnachricht aufweist und das Objekt eine Dienstqualitätsinformation enthält.

## Revendications

1. Procédé dans un système de communication incluant un premier sous-système et un second sous-système, le procédé comprenant les étapes consistant à :
générer un message de commande qui peut être interprété par au moins un élément du premier sous-système et par au moins un élément du second sous-système ;
ajouter au message de commande un objet contenant des informations de commande qui est transparent pour les éléments du second sous-système ;
transmettre le message de commande via les premier et second sous-systèmes ;
commander le fonctionnement d'au moins un des éléments du premier sous-système sur la base des informations de commande contenues dans l'objet, dans lequel le second sous-système comprend un réseau de données qui est basé sur un protocole de communication à paquets commutés qui est différent du protocole de communication utilisé par le premier sous-système.

2. Procédé selon la revendication 1, dans lequel le premier sous-système comprend un réseau à paquets commutés fournissant des services sans fil à ses utilisateurs.

3. Procédé selon la revendication 1 ou 2, dans lequel le premier sous-système est basé sur un système de téléphone mobile universel et/ou des services radio général de paquet.

4. Procédé selon l'une quelconque des revendications précédentes, dans lequel le second sous-système est un réseau de données basé sur le protocole Internet.

5. Procédé selon l'une quelconque des revendications précédentes, dans lequel le message est transmis de plus à un troisième sous-système comprenant au moins un élément capable d'interpréter les informations supportées par l'objet.

6. Procédé selon la revendication 5, dans lequel le troisième sous-système est basé sur des principes fonctionnels sensiblement similaires à ceux du premier sous-système.

7. Procédé selon la revendication 5, dans lequel l'objet est interprété dans un élément du troisième sous-système.

8. Procédé selon l'une quelconque des revendications précédentes, dans lequel le système de communication comprend au moins un premier terminal et un second terminal, le premier terminal appartenant au premier sous-système, et dans lequel une connexion entre les deux terminaux est négociée sur la base d'un mécanisme de qualité de service pour les données sous forme de paquet.

9. Procédé selon la revendication 8, dans lequel le second terminal appartient au troisième sous-système.

10. Procédé selon l'une quelconque des revendications précédentes, dans lequel le message de commande comprend un message de protocole de réservation de ressources.

11. Procédé selon l'une quelconque des revendications précédentes, dans lequel l'objet contient au moins un paramètre de qualité de service qui est demandé par le premier système à des fins d'établissement de connexion.

12. Procédé selon la revendication 11, dans lequel l'objet véhicule tous les paramètres requis pour l'établissement de connexion.

13. Procédé selon la revendication 11, dans lequel l'objet véhicule un sous-ensemble de paramètres requis pour l'établissement de connexion.

14. Procédé selon l'une quelconque des revendications 1 à 10, dans lequel les informations de qualité de service sont déterminées sur la base des informations véhiculées par l'objet.

15. Procédé selon l'une quelconque des revendications précédentes, dans lequel des informations supplémentaires de qualité de service sont déterminées sur la base des informations véhiculées par l'objet, et les informations supplémentaires sont utilisées pour éviter des incohérences entre les paramètres de qualité de service des différents réseaux de communication.

16. Procédé selon l'une quelconque des revendications précédentes, dans lequel les éléments des réseaux du second sous-système ignorent l'objet et envoient l'objet dans tous les messages qui résultent du traitement du message de commande.

17. Procédé selon l'une quelconque des revendications précédentes, dans lequel l'objet inclut au moins un bit ordonnant à l'élément le traitement du message de commande si l'objet devrait être ignoré ou non par l'élément.

18. Procédé selon la revendication 17, dans lequel un bit de poids fort est inclus dans l'octet de numéro de classe de l'objet.

19. Procédé selon l'une quelconque des revendications précédentes, dans lequel un élément du réseau lit le contenu des informations de l'objet et enlève l'objet du message avant d'envoyer le message.

20. Procédé selon l'une quelconque des revendications précédentes, dans lequel un élément du réseau dans le trajet de communication génère les objets et ajoute l'objet dans le message de commande.

21. Procédé selon la revendication 20, dans lequel l'élément comprend une station mobile.

22. Procédé selon la revendication 20, dans lequel l'élément comprend un élément d'un réseau d'accès radio du premier sous-système.

23. Procédé selon la revendication 20, dans lequel l'élément comprend un noeud de passerelle entre deux réseaux différents.

24. Procédé selon l'une quelconque des revendications 20 à 23, dans lequel l'utilisateur de l'élément du réseau est autorisé à commander l'utilisation des objets.

25. Procédé selon l'une quelconque des revendications précédentes, dans lequel l'objet est interprété dans un terminal qui termine la connexion.

26. Procédé selon l'une quelconque des revendications précédentes, dans lequel l'objet est interprété dans un noeud de passerelle entre des réseaux différents.

27. Système de communication comprenant :
un premier sous-système comprenant une première pluralité d'éléments pour transmettre des messages ;
un second sous-système comprenant une seconde pluralité d'éléments pour transmettre des messages ;
un contrôleur pour générer un message de commande qui peut être interprété par au moins un élément du premier sous-système et par au moins un élément du second sous-système ; et
un contrôleur pour ajouter au message de commande un objet contenant des informations de commande qui sont transparentes aux éléments du second sous-système, dans lequel l'agencement est tel que le fonctionnement d'au moins un des éléments du premier sous-système est commandé sur la base des informations de commande contenues dans l'objet tandis que les éléments de second sous-système ne sont pas affectés par les informations de commande contenues dans l'objet, dans lequel le second sous-système comprend un réseau de données qui est basé sur un protocole de communication à paquets commutés qui est différent du protocole de communication utilisé par le premier sous-système.

28. Système de communication selon la revendication 27, dans lequel le premier sous-système comprend un réseau à paquets commutés fournissant des services sans fil à ses utilisateurs.

29. Système de communication selon la revendication 27 ou 28, dans lequel le premier sous-système est basé sur les spécifications de système de téléphone mobile universel et/ou les spécifications de service radio de paquet général.

30. Système de communication selon l'une quelconque des revendications 27 à 29, dans lequel le second sous-système est un réseau de données qui est basé sur le protocole Internet.

31. Système de communication selon l'une quelconque des revendications 27 à 3D, dans lequel le premier sous-système comprend un premier réseau et un second réseau, le message étant transmis du premier réseau au second réseau via le second sous-système.

32. Système de communication selon la revendication 31, dans lequel les premier et second réseaux sont basés sur des principes fonctionnels similaires.

33. Système de communication selon l'une quelconque des revendications 27 à 32, dans lequel le système de communication comprend au moyen un premier terminal et un second terminal, le premier terminal appartenant au premier sous-système, et dans lequel une connexion entre les deux terminaux est adaptée pour être négociée sur la base d'un mécanisme de qualité de service pour les données sous forme de paquet.

34. Système de communication selon l'une quelconque des revendications 27 à 33, dans lequel le message de commande comprend un message de protocole de réservation de ressources.

35. Système de communication selon l'une quelconque des revendications 27 à 34, dans lequel l'objet contient au moins un paramètre de qualité de service qui est demandé par le premier sous-système à des fins d'établissement de connexion.

36. Système de communication selon l'une quelconque des revendications 27 à 35, dans lequel les informations de qualité de service sont déterminées sur la base des informations véhiculées par l'objet.

37. Système de communication selon l'une quelconque des revendications 27 à 36, dans lequel les éléments du réseau du second sous-système sont adaptés pour ignorer l'objet et envoyer l'objet dans tous les messages qui résultent du traitement de message de commande.

38. Système de communication selon l'une quelconque des revendications 27 à 37, dans lequel l'élément du réseau dans le trajet de communication qui génère les objets et ajoute l'objet dans le message de commande est un de ce qui suit :
une station mobile ; un élément d'un réseau d'accès radio du premier sous-système ; un noeud de passerelle entre deux réseaux différents.

39. Système de communication selon l'une quelconque des revendications 27 à 38, dans lequel l'objet est interprété par un de ce qui suit : un terminal qui termine la connexion ; un élément du troisième sous-système ; un noeud de passerelle entre des réseaux différents.

40. Un système de communication selon la revendication 31, dans lequel le second sous-système comprend une liaison entre les premier et second réseaux.

41. Equipement utilisateur pour un système fournissant une communication à paquets commutés sans fil entre des premier et second réseaux à paquets commutés, l'équipement utilisateur comprenant :
un contrôleur pour générer un message de commande qui doit être signalé du premier réseau au second réseau, le message de commande pouvant être lu par les éléments d'un premier groupe prédéfini d'éléments des premier et second réseaux ;
et
un contrôleur pour ajouter au message de commande un objet contenant des informations de commande, ledit message ne pouvant être lu que par les éléments d'un second groupe prédéfini d'éléments des premier et second réseaux, dans lequel le premier réseau est basé sur un protocole de communication à paquets commutés qui est différent du protocole de communication utilisé par le second réseau.

42. Equipement utilisateur selon la revendication 41, dans lequel le message comprend un message de protocole de réservation de ressources et l'objet contient des informations de qualité de service.

43. Message de commande pour un système de communication, ledit système de communication fournissant une communication de données sous forme de paquet sans fil entre des premier et second réseaux, le message de commande comprenant :
une partie qui doit être interprétée par les éléments d'un premier groupe prédéfini des éléments des premier et second réseaux ; et
un objet contenant des informations de commande, ledit objet n'étant lisible que par les éléments d'un second groupe prédéfini des éléments des premier et second réseaux, dans lequel le premier réseau est basé sur un protocole de communication à paquets commutés qui est différent du protocole de communication utilisé par le second réseau.

44. Message de commande selon la revendication 43, dans lequel le message comprend un message de protocole de réservation de ressources et l'objet contient des informations de qualité de service.
